Europäisches Patentamt

European Patent Office

Office européen des brevets

(19)

(11) Veröffentlichungsnummer: **0 331 809**

A1

## EUROPÄISCHE PATENTANMELDUNG

(12)

(21) Anmeldenummer: 88120763.3

(22) Anmeldetag: 13.12.88

(51) Int. Cl.⁴: **B01D 46/28 , B01D 45/14**

(30) Priorität: 09.03.88 DE 3807701

(43) Veröffentlichungstag der Anmeldung:
13.09.89 Patentblatt 89/37

(84) Benannte Vertragsstaaten:
DE FR GB IT NL

(71) Anmelder: RÜTGERSWERKE
AKTIENGESELLSCHAFT
Mainzer Landstrasse 217
D-6000 Frankfurt am Main 1(DE)

(72) Erfinder: Müller, Kurt, Dipl.-Ing.
Unterster Zwerchweg 58
D-6000 Franfurt a.M.(DE)
Erfinder: Oeste, F. Dietrich, Dipl.-Ing.
Steinbergstrasse 4
D-6309 Münzenberg 2(DE)

(54) Vorrichtung und Verfahren zur Aerosolabscheidung aus Abgasen.

(57) Aus Abgasen werden insbesondere Feststoffpartikel und klebrigen Flüssigkeitströpfchen enthaltene Aerosole beim axialen Durchströmen eines Abscheiders mittels rotierender Einbauten entfernt. Die Aerosole koagulieren an den radial angeordneten feinen Drähten der Rotoren und werden zusammen mit einer Spülflüssigkeit an die Gehäusewandung geschleudert, von wo sie abfließen können. Zwischen den Rotoren sind Statoren angeordnet, die den Gasstrom in axialer Richtung umlenken. Die Spülflüssigkeit wird durch Dekantieren oder/und Destillieren aufgearbeitet und zurückgeführt. Im Gegensatz zu rotierenden Trommelfiltern besteht keine Verstopfungsgefahr.

EP 0 331 809 A1

## Vorrichtung und Verfahren zur Aerosolabscheidung aus Abgasen

Die Erfindung betrifft eine Vorrichtung und ein Verfahren zur Abscheidung von Aerosolen aus Abgasen industrieller und handwerklicher Betriebe.

In zahlreichen Herstellungs- und Verarbeitungsprozessen industrieller und handwerklicher Betriebe treten Abgase auf, die Aerosole unterschiedlicher Art enthalten. Wegen ihres geringen Durchmessers sind diese Aerosolteilchen lungengängig und haben daher häufig eine gesundheitsschädliche Wirkung.

Für die Aerosolabscheidung sind Filter, Wäscher, Zyklone und elektrostatische Abscheider im Einsatz. Sie lösen das Problem jedoch nicht befriedigend, da sie entweder für die Abscheidung feiner Aerosole nicht geeignet sind, wie beispielsweise Metallgestrickfilter, oder Zyklone, oder aber ihr Wartungs- und Reinigungsaufwand ist zu hoch wie bei Elektrofiltern oder Faserfiltern.

Für die Abscheidung von Ölaerosolen wurde eine Abscheidevorrichtung mit rotierendem Trommelfilter vorgeschlagen, bei dem das mit Aerosolen belastete Gas das Filter von innen nach außen durchströmt (cav, 1987, Seiten 114 - 116).

Wie bei den Faserfiltern werden die Aerosoltröpfchen an den Faseroberflächen abgeschieden und bilden einen Ölfilm aus, der im Gleichstrom mit dem Gas durch das Filter wandert und als koagulierter Tropfen von der äußeren Filteroberfläche abgeschleudert wird. Die Tropfen prallen auf die Gehäusewandung und fließen von dort ab. Wegen der Gleichstromführung von gereinigtem Gas und abgeschiedenem Öl besteht die Gefahr einer Rückvermischung, so daß eine wirksame Aerosolabscheidung ohne nachgeschaltete stationäre Filter nur bei niedrigen Strömungsgeschwindigkeiten im Filtergehäuse erreicht wird.

Außerdem muß das Öl relativ dünnflüssig sein und die Aerosole dürfen keine klebrigen oder festen Bestandteile enthalten, die das Trommelfilter verstopfen können. Diese Voraussetzungen sind aber bei vielen Prozessen wie etwa bei der Bitumenverarbeitung, der Kunstharzherstellung oder der Spritzlackierung nicht gegeben.

Es bestand daher die Aufgabe, eine Vorrichtung und ein Verfahren für die Abscheidung von Aerosolen, die auch klebrige, hochviskose oder/und feste Bestandteile enthalten können, aus Abgasen zu entwickeln.

Die Aufgabe wird erfindungsgemäß durch einen Abscheider mit rotierenden Einbauten gelöst, der aus einem überwiegend axial durchströmten zylindrischen Gehäuse 1 besteht, in dem ein oder mehrere Rotoren 2 nach Art von Rundbürsten mit einer oder mehreren Reihen feiner, radial angeordneter, bis nahe an die Gehäusenwand reichender Borsten oder Drähten angeordnet sind, und das mit einem Gaseintritts- 3 und einem Gasaustrittsstutzen 4, sowie einem Spülflüssigkeitseinlaß 5 und einer Schadstoffableitung 6 versehen ist.

Da die Wirksamkeit des Abscheiders von der Relativgeschwindigkeit der Borsten zum Abgas abhängt, das Gas aber bereits durch die erste Rundbürste in eine rotierende Strömung gebracht wird, ist es sinnvol bei Abscheidern mit mehreren Rundbürsten zwischen diesen Statorelementen anzuordnen, die den Gasstrom in axiale Richtung oder in eine gegenläufige Rotationsströmung lenken.

Das Gehäuse ist im Bereich der Rundbürsten vorzugsweise mit umlaufenden Nuten versehen, in die die Enden der Bürsten hineinragen, und die über Bohrungen oder Schlitze mit der Schadstoffableitung verbunden sind. Auf diese Weise wird das Herausspritzen der abgeschleuderten Flüssigkeit verhindert.

In einer besonderen Ausführung der Erfindung sind die Rundbürsten auf einer Hohlwelle angeordnet, die im Bereich der Bürsten Bohrungen aufweist, durch die die Spülflüssigkeit an die Borsten der Bürsten gelangt.

Den mit einer Flüssigkeit gespülten Rotoren können weitere nichtgespülte nachgeschaltet sein, um evt. vom Gasstrom mitgerissene Flüssigkeitströpfchen aus in der Spülflüssigkeit gelösten Aerosolen abzuscheiden. Es ist auch möglich, dem erfindungsgemäßen Abscheider weitere übliche Abscheider wie z. B. Filter nachzuschalten.

Um bei starker Verschmutzung z. B. durch erhärtende Aerosolteilchen nach längerem Stillstand die Vorrichtung leicht reinigen zu können, kann das Gehäuse so konstruiert sein, daß es mit einem Lösungsmittel oder einer Waschflüssigkeit vollständig gefüllt werden kann. Zur Verbesserung des Reinigungseffektes können zusätzliche Ultraschallgeneratoren in dem Gehäuse angeordnet sein.

Der Aufbau und die Wirkungsweise der Vorrichtung wird anhand der Zeichnungen näher beschrieben.

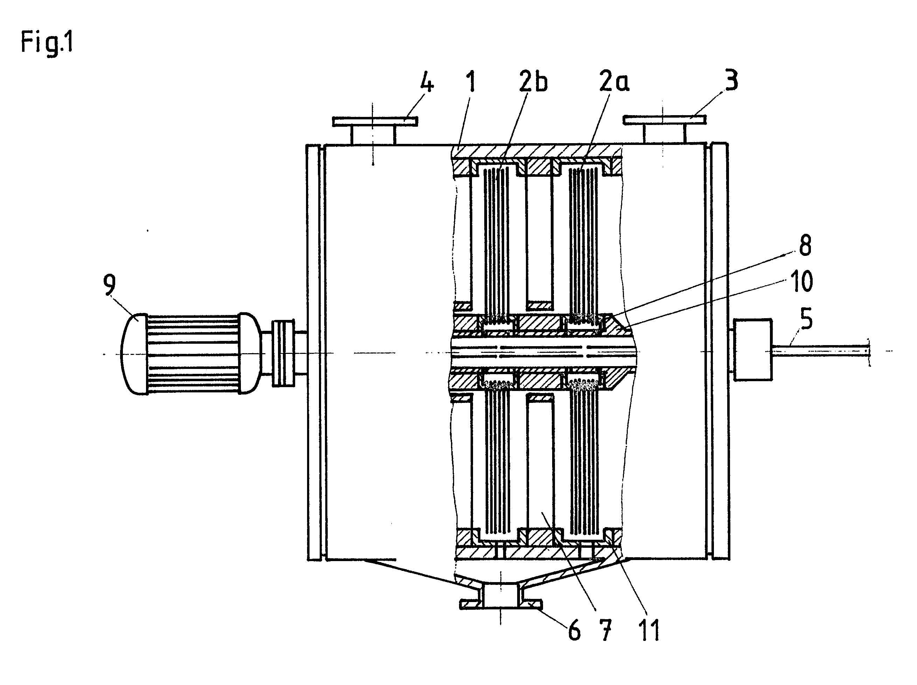

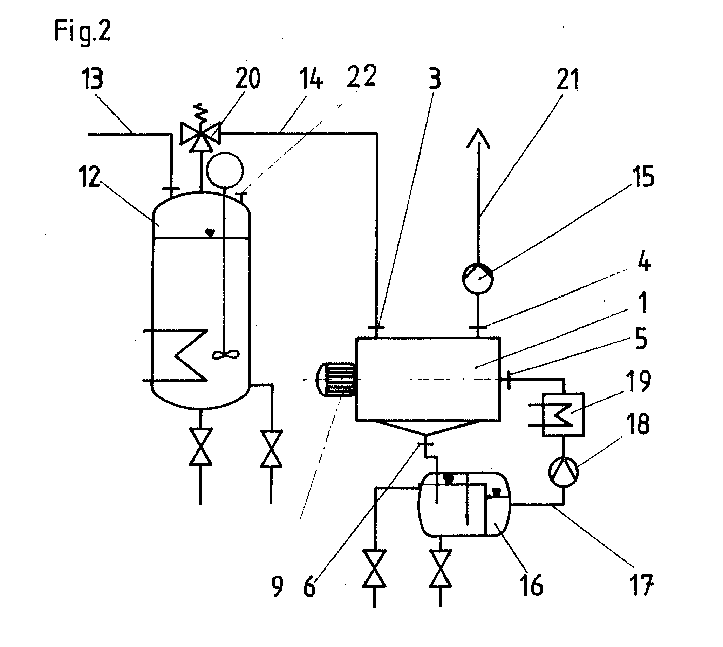

Fig. 1 zeigt den Schnitt durch einen erfindungsgemäßen Abscheider und Fig. 2 eine Anlage zur Bitumennebel-Abscheidung mit dem Abscheider.

Die aerosolbeladene Abluft gelangt über den Gaseintrittsstutzen 3 in das Gehäuse 1 des Abscheiders. Sie durchströmt in etwa axialer Richtung den ersten Rotor 2a. Dabei kommt ein Teil der Aerosole mit den feinen Drähten des Rotors in Berührung. Die flüssigen Teilchen koagulieren und bilden einen Film auf der Drahtoberfläche an dem auch Feststoffpartikel anhaften. Das aus dem Rotor 2a austretende in Umfangsrichtung beschleunigte Gas wird durch den mit Lamellen versehenen Stator 7 wieder in radiale Richtung gelenkt und durchströmt dann den zweiten Rotor 2b, wo weitere Aerosolteilchen abgeschieden werden. Das gereinigte Abgas verläßt das Gehäuse des Abscheiders durch den Gasaustrittsstutzen 4.

Die Fußringe 8 der Rotoren 2 bestehen aus einem nach innen offenem U-Profil und sind auf der vom Motor 9 angetriebenen Hohlwelle 10 befestigt, die im Bereich der Rotoren 2 mit Bohrungen versehen ist. In der Hohlwelle 10 ist ein an seinem Ende geschlossenes Rohr 5 mit Bohrungen im Bereich der Rotoren 2 gelagert, das als Spülflüssigkeitseinlaß dient. Die Spülflüssigkeit dringt über die Bohrungen des Rohres 5 und der Hohlwelle 10 in den Ringraum des Fußringes 8 ein. Über zwischen den Drähten befindliche Öffnungen verteilt sie sich über die Drahtoberflächen und schwemmt den anhaftenden Flüssigkeitsfilm mit den Feststoffpartikeln in radialer Richtung fort.

Die Statoren sind zwischen Ringen 11 aus einem nach innen offenen U-Profil eingeklemmt. Das Gemisch aus Aerosolteilchen und Spülflüssigkeit wird in dieses U-Profil hineingeschleudert, läuft nach unten, verläßt das Gehäuse 1 über die Bohrungen im Gehäuse 1 und den Ringen 11 und fließt über die Schadstoffleitung 6 zur nicht dargestellten Wiederaufbereitungsanlage für die Spülflüssigkeit.

## Beispiele

### Beispiel 1

Als Beispiel für die Anwendung der erfindungsgemäßen Vorrichtung wird die Abluftreinigung bei einem Rührwerksbehälter beschrieben.

Der Rührwerksbehälter 12 wird über die Leitung 13 mit 190° C heißem Bitumen und über den Stutzen 22 mit Gesteinsmehl beschickt.

Beim Mischen entstehen 100 m³ h⁻¹ Abluft mit einem Aerosolgehalt von 200 mg m⁻³ Bitumen und 25 mg m⁻³ Quarz- und Schiefermehl.

Der Behälter 12 ist über die Leitung 14 mit dem Gaseintrittsstutzen 3 des Abscheiders verbunden.

Die etwa 20 °C warme Abluft wird mit einer Geschwindigkeit von 1 ms⁻¹ durch das mit fünf Rotoren und drei Statoren ausgerüstete Gehäuse 1 des Abscheiders gesaugt. Die Rotoren werden von dem Elektromotor 9 mit einer mittleren Umfangsgeschwindigkeit von 100 ms⁻¹ angetrieben und mit 1 l h⁻¹ Heizöl EL als Waschflüssigkeit gespült. Das Reingas mit einem Aerosolgehalt von weniger als 1 mg m⁻³ wird über das mit dem Gasaustrittsstutzen 4 verbundene Gebläse 15 in den Abluftkamin 21 geleitet. Da die abgeschiedene Aerosolmenge in dem rohgasseitigen Rotor am größten ist, wurde die Spülflüssigkeitsmenge den ersten drei Rotoren in Strömungsrichtung im Verhältnis 6 : 3 : 1 zudosiert. Die letzten beiden Rotoren laufen trocken als zusätzliche Abscheider. Das von den Rotoren abgeschleuderte Gemisch

aus Bitumen, Heizöl und Feststoffen fließt über die Schadstoffableitung 6 in den Sedimentationsbehälter 16, von wo aus die von Feststoffen befreite Waschflüssigkeit über die Leitung 17 und die Pumpe 18 wieder in den Spülflüssigkeitseinlaß 5 gepumpt wird. Um auch in den warmen Sommermonaten die Abgastemperatur von 20° C beizubehalten, ist in der Leitung 17 ein Wärmeaustauscher 19 eingebaut, der es ermöglicht, die Temperatur der Waschflüssigkeit und damit die Viskosität konstant zu halten. Über eine Betriebszeit von einem Monat zeigten sich an den Rotoren keinerlei Verschmutzungen.

In der Leitung 14 ist außerdem ein Belüftungsventil 20 eingebaut, das die Bildung eines Unterdrucks z. B. bei gleichzeitiger Bitumenentnahme verhindert.

Der Sedimentationsbehälter 16 kann zusätzlich mit einer Möglichkeit zu Wasserabscheidung versehen sein, wenn in dem Tank 12 beispielsweise Bitumen aufgeschmolzen werden soll.

Die Waschflüssigkeit muß nicht notwendigerweise über eine Hohlwelle den Rotoren zugeführt werden. Sie kann auch alternativ von der Gehäusewandung aus auf die Rotoren aufgesprüht oder aufgetragen werden. Wichtig ist allein, daß sie im Kreuzstrom zum Gas geführt wird, damit keine Rückvermischung auftreten kann.

### Beispiel 2

Der Versuch entsprechend dem Beispiel 1 wird ohne Waschflüssigkeitszugabe wiederholt. Nach 200 Betriebsstunden zeigen sich Anbackungen von Bitumenbestandteilen und Feststoffpartikeln an Rotoren und Statoren. Das Gehäuse wird daraufhin mit Heizöl EL geflutet und 5 min lang mit einer Ultraschallquelle beschallt. Danach wird das Gehäuse unter laufender Beschallung entleert und die Schallquelle abgeschaltet. Rotoren und Statoren waren vollständig gereinigt. Auch das Gehäuse enthielt keine Rückstände mehr.

### Vergleichsbeispiel

Durch einen Ölnebelabscheider mit rotierendem Trommelfilter entsprechend dem Stand der Technik (cav, 1987, Seiten 114 und 116) mit einem Außendurchmesser von 400 mm, wird bei einer Umfangsgeschwindigkeit von 100 ms⁻¹ ein Abluftstrom gleicher Menge und Zusammensetzung wie in den Beispielen 1 und 2 hindurchgeleitet. Bereits nach 200 Betriebsstunden war der Druckanstieg so hoch, daß der Versuch abgebrochen werden mußte. Das Filtervlies hatte sich mit Bitumen und Feststoffpartikeln weitgehend zugesetzt. Der Versuch, das Trommelfilter im ausgebauten Zustand in Heizöl EL unter Einwirkung von Ultraschall zu reinigen, verlief negativ. Nach 5 minütiger Behandlungsdauer war nur ein Teil des Bitumens in Lösung gegangen. Vor allem aber ließen sich die Feststoffpartikel aus dem Vlies nicht entfernen.

Die bei dem erfindungsgemäßen Verfahren verwendete Spülflüssigkeitsmenge ist in erster Linie von der Viskosität der als Aerosol vorliegenden Flüssigkeit und von der Feststoffbeladung abhängig. Außerdem spielt die Umfangsgeschwindigkeit sowie die Viskosität und das Lösungsvermögen der Spülflüssigkeit eine Rolle. Für die meisten Fälle liegt das Verhältnis Spülflüssigkeit zu abzuscheidender Aerosolmenge zwischen 20:1 und 200:1.

Wenn gleichzeitig gasförmige Schadstoffe mit der Spülflüssigkeit abgeschieden werden sollen, richtet sich die Menge nach dem Gehalt an diesen Schadstoffen.

Die mittlere Rotationsgeschwindigkeit ist von der Strömungsgeschwindigkeit der Abgase, der Anzahl der Rotoren und Statoren und von der Partikelgröße der Aerosolteilchen abhängig. Normalerweise reicht bei einer mehrstufigen Abscheidung eine mittlere Rotationsgeschwindigkeit im Bereich von 50 bis 200 ms⁻¹ aus bei einer Gasströmungsgeschwindigkeit bis zu 5 ms⁻¹.

## Ansprüche

1. Vorrichtung zur Abscheidung von Aerosolen aus Abgasen mit motorbetriebenen, rotierenden Einbauten, **dadurch gekennzeichnet,** daß sie aus einem überwiegend axial durchströmten zylindrischen Gehäuse (1) besteht, in dem ein oder mehrere Rotoren (2) nach Art von Rundbürsten mit einer oder mehreren Reihen feiner, radial angeordneter, bis nahe an die Gehäusewandung reichender Borsten oder Drähten angeordnet sind, und die mit einem Gaseintritts- (3) und einem Gasaustrittsstutzen (4) sowie einem Spülflüssigkeitseinlaß (5) und einer Schadstoffableitung (6) versehen ist.

2. Vorrichtung nach Anspruch 1, **dadurch gekennzeichnet,** daß das Gehäuse (1) mit umlaufenden Nuten versehen ist, in die die Rotoren hineinragen.

3. Vorrichtung nach einem der Ansprüche 1 bis 2, **dadurch gekennzeichnet,** daß zwischen den Rotoren (2) Statorelemente (7) angeordnet sind.

4. Vorrichtung nach einem der Ansprüche 1 bis 3, **dadurch gekennzeichnet,** daß die Rotoren (2) auf einer mit Bohrung versehenen Hohlwelle (10) angeordnet sind, in die der Spülflüssigkeitseinlaß (5) einmündet.

5. Vorrichtung nach einem der Ansprüche 1 bis 4, **dadurch gekennzeichnet,** daß in dem Gehäuse (1) ein oder mehrere Ultraschallgeneratoren angeordnet sind.

6. Verfahren zur Abscheidung von Aerosolen aus Abgasen, **dadurch gekennzeichnet,** daß das Abgas das Gehäuse (1) in überwiegend axialer Richtung durchströmt und mit den vom Motor (9) angetriebenen Rotoren (2), deren Drähte oder Borsten mit einer Spülflüssigkeit benetzt werden, in Kontakt gebracht werden, wobei die flüssigen Aerosolteilchen koagulieren und die Feststoffpartikel binden, die Spülflüssigkeit zusammen mit den abgeschiedenen Aerosolteilchen im Kreuzstrom zum Gas geführt und an die Gehäusewandung geschleudert wird, an der sie entlang fließt bis sie die Vorrichtung über die Schadstoffableitung (6) verläßt.

7. Verfahren nach Anspruch 6, **dadurch gekennzeichnet,** daß der Gasstrom zwischen den Rotoren (2) über mit Lamellen versehenen Statoren (7) in axiale Richtung oder entgegen der Drehrichtung der Rotoren (2) gelenkt wird.

8. Verfahren nach einem der Ansprüche 6 oder 7, **dadurch gekennzeichnet,** daß die Spülflüssigkeit über die Hohlwelle (10) den Rotoren (2) zugeführt wird.

9. Verfahren nach einem der Ansprüche 6 bis 8, **dadurch gekennzeichnet,** daß die beladene Spülflüssigkeit von den Rotoren (2) in umlaufende Nuten des Gehäuses abgeschleudert werden.

10. Verfahren nach einem der Ansprüche 6 bis 9, **dadurch gekennzeichnet,** daß die Spülflüssigkeit durch Dekantieren oder/und Destillieren aufgearbeitet und wiederverwendet wird.

11. Verfahren nach einem der Ansprüche 6 bis 10, **dadurch gekennzeichnet,** daß bei einer mehrstufigen Abscheidung und einer Gasströmungsgeschwindigkeit bis zu 5 ms⁻¹ die mittlere Rotationsgeschwindigkeit der Rotoren im Bereich von 50 bis 200 ms⁻¹ liegt.

12. Verfahren nach einem der Ansprüche 6 bis 11, **dadurch gekennzeichnet,** daß das Verhältnis Spülflüssigkeit zur abzuscheidener Aerosolmenge im Bereich von 20:1 bis 200:1 liegt.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 144 999  (G. OSPELT) <br> * Insgesamt * <br> --- | 1,2,4,6 ,8 | B 01 D  46/28 <br> B 01 D  45/14 |
| A | GB-A-1 408 418  (J. THORDARSON) <br> * Ansprüche 1,2; Figur 3 * <br> --- | 1-3,4,6 -9 | |
| A | DE-C-  542 009  (W. SCHWARZ & CO.) <br> * Insgesamt * <br> ----- | 3,7 | |

RECHERCHIERTE SACHGEBIETE (Int. Cl.4)

B 01 D  46/00
B 01 D  45/00
B 01 D  47/00

Der vorliegende Recherchenbericht wurde für alle Patentansprüche erstellt

| Recherchenort | Abschlußdatum der Recherche | Prüfer |
|---|---|---|
| DEN HAAG | 10-04-1989 | POLESAK, H.F. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes
   Dokument

EPO FORM 1503 03.82 (P0403)